# EUROPEAN PATENT APPLICATION

(11) **EP 4 464 475 A1**
(43) Date of publication of application: **20.11.2024**
(21) Application number: 22920190.0
(22) Date of filing: 12.01.2022
(51) Int. Cl.: B25J 19/06

(54) **SAFETY DEVICE FOR ROBOTS AND ROBOT SYSTEM**

(71) Applicant: Fuji Corporation, Chiryu-shi, Aichi 472-8686 (JP)
(72) Inventor: HIRANO, Atsunori, Chiryu-shi, Aichi 472-8686 (JP)
(74) Representative: Grünecker Patent- und Rechtsanwälte PartG mbB
(86) International application number: PCT/JP2022/000624
(87) International publication number: WO 2023/135664

(57) **Abstract**

A safety device for a robot is applied to a robot including a control device that controls a robot speed, and includes a detection section, a setting section, and an output section. The detection section is capable of detecting an object present within a predetermined detection range, and detects a relative distance and a relative speed between the object within the detection range and the detection section. The setting section sets a speed limit value of the robot speed based on a combination of the relative distance and the relative speed detected by the detection section. The output section outputs the speed limit value set by the setting section to the control device.

## Description

### Technical Field

The present description discloses a safety device for robots and a robot system.

### Background Art

Conventionally, as a safety device for a robot of this type, there has been proposed a device in which a distance to an object present in a search area is measured by a detection device, a limit signal for limiting a maximum speed of the robot is generated according to the distance to the object, and the generated limit signal is transmitted to a robot controller (for example, see Patent Literature 1).

### Patent Literature

Patent Literature 1: JP-A-2016-209953

### Summary of the Invention

### Technical Problem

When the object is moving so as to approach the robot, the time until the object reaches the robot is changed depending on the moving speed of the object, and thus, it is desirable to take this into consideration when controlling a robot speed. Meanwhile, when the moving speed of the object is also measured in addition to the distance to the object by the detection device and the measured value is transmitted to the robot controller, an interface between the safety device and the robot controller (control device) is complicated and the system is complicated.

A main object of the present disclosure is to further improve safety while simplifying a system.

### Solution to Problem

The present disclosure employs the following means in order to achieve the main object described above.

A safety device for a robot of the present disclosure is summarized as a safety device for a robot including a control device that controls a robot speed, the safety device including: a detection section capable of detecting an object present within a predetermined detection range, the detection section detecting a relative distance and a relative speed between the object within the detection range and the detection section; a setting section setting a speed limit value of the robot speed based on a combination of the relative distance and the relative speed detected by the detection section; and an output section outputting the speed limit value set by the setting section to the control device.

In the safety device for a robot of the present disclosure, the speed limit value of the robot speed is set based on the combination of the relative distance and the relative speed between the object within the detection range and the detection section, and the set speed limit value is output to a control device of a robot. Since the control device for a robot only needs to input the speed limit value from the safety device, the robot speed can be appropriately controlled based on the relative distance and the relative speed between the object and the detection section without complicating the interface between the control device and the safety device. As a result, it is possible to further improve safety while simplifying the system.

A robot system of the present disclosure includes: a robot main body; a robot control device configured to control a robot speed of the robot main body; and a safety device including a detection section capable of detecting an object present within a predetermined detection range, the detection section detecting a relative distance and a relative speed between the object within the detection range and the detection section, a setting section configured to set a speed limit value of the robot speed based on a combination of the relative distance and the relative speed detected by the detection section, and an output section configured to output the speed limit value set by the setting section to the robot control device.

Since the robot system of the present disclosure includes the safety device of the present disclosure, it is possible to achieve the same effect as the safety device of the present disclosure, that is, the effect of further improving safety while simplifying the system.

### Brief Description of Drawings

Fig. 1 is a schematic configuration diagram of a robot system according to the present embodiment.
Fig. 2 is a block diagram illustrating an electrical connection relationship among a robot main body, a robot control device, and a safety device.
Fig. 3 is a flowchart illustrating an example of information output processing executed by a control section of the safety device.
Fig. 4 is a diagram illustrating a relationship among a relative distance, a relative speed, and a robot speed number.
Fig. 5 is a diagram illustrating a relationship among the robot speed number, a speed override, and output information.
Fig. 6 is a diagram illustrating a relationship between the relative distance between the safety device and an interfering object and the speed override.
Fig. 7 is a diagram illustrating a relationship between a moving speed of the interfering object, a time until collision with a robot main body, and the speed override.
Fig. 8 is a diagram illustrating a relationship between the moving speed of the interfering object, the time until collision with the robot main body, and the speed override.
Fig. 9 is a diagram illustrating a relationship between the moving speed of the interfering object, the time until collision with the robot main body, and the speed override.
Fig. 10 is a flowchart illustrating information output processing according to another embodiment.
Fig. 11 is a diagram illustrating a relationship between a relative distance and output information.
Fig. 12 is a schematic configuration diagram of a robot system according to another embodiment.

### Description of Embodiments

Next, an embodiment of the present disclosure will be described with reference to the drawings.

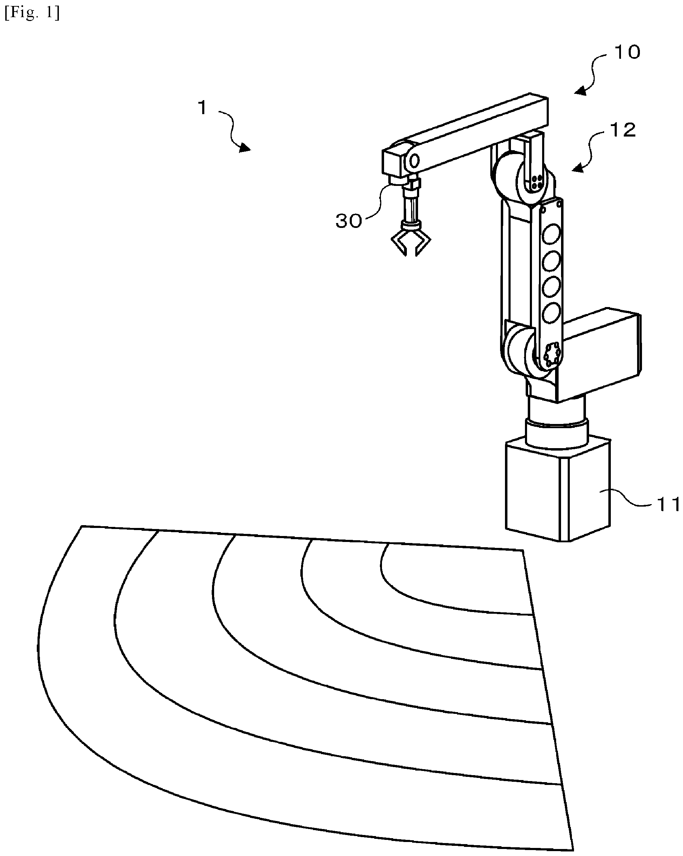

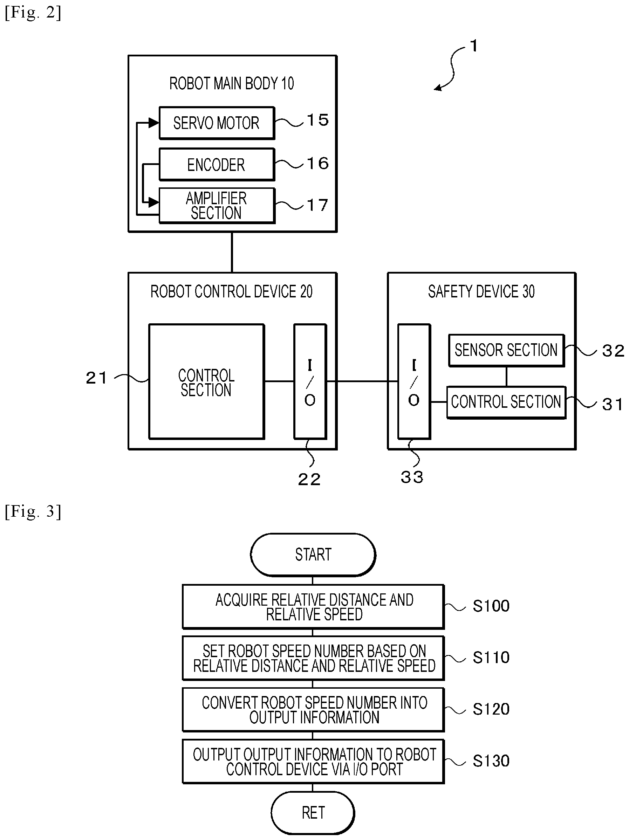

Fig. 1 is a schematic configuration diagram of robot system 1 of the present embodiment. Fig. 2 is a block diagram illustrating an electrical connection relationship among robot main body 10, robot control device 20, and safety device 30. As illustrated, robot system 1 of the present embodiment includes robot main body 10, robot control device 20 that controls the operation of robot main body 10, and safety device 30 for a robot capable of detecting an interfering object around robot main body 10.

Robot main body 10 is a working robot that performs a predetermined work, and examples thereof include a machining robot that machines a workpiece with a tool, a conveyance robot that grips a workpiece with a chuck and conveys the workpiece to another position, and an assembling robot that grips a workpiece with a chuck and assembles the workpiece to an object.

Robot main body 10 includes base 11 and articulated arm 12 installed on base 11. Articulated arm 12 includes multiple arms connected in series to base 11 via joint shafts. Servo motor 15 that drives the corresponding joint shaft and encoder 16 (rotary encoder) that detects a rotation angle of corresponding servo motor 15 are disposed on each joint shaft. Robot main body 10 also includes amplifier section 17 that applies a driving current to each servo motor 15.

Robot control device 20 includes control section 21 configured as a microprocessor including CPU, ROM, and RAM, and I/O port 22 for exchanging signals with control section 31 of safety device 30. Further, robot control device 20 outputs a control signal to amplifier section 17 of robot main body 10 and inputs a detection signal from encoder 16.

Control section 21 of robot control device 20 controls the operation of robot main body 10 as follows. That is, control section 21 first sets a target angle of each joint shaft of articulated arm 12 from a target position and a target posture of an end effector thereof by inverse kinematics. Subsequently, control section 21 acquires a current angle of each joint shaft from corresponding encoder 16, and sets a speed command value of the joint shaft by feedback calculation (for example, proportional integral calculation or proportional integral derivative calculation) based on the difference between the target angle and the current angle for each joint shaft. Next, control section 21 sets a target speed that limits the speed of the speed command value by multiplying the speed command value by the speed override, which will be described later, that is determined in a range from a value 0 (0%) to a value 1 (100%). For example, when the speed override is the value 1 (100%), the target speed is the same value as the speed command value. That is, a robot speed is not limited. When the speed override is 0.5 (50%), the target speed is half the speed command value. Further, when the speed override is the value 0 (0%), the target speed is the value 0 regardless of the speed command value. That is, robot main body 10 stops operating. Subsequently, control section 21 calculates a current speed from the current angle of the joint shaft acquired from encoder 16, and sets a torque command value to be output from servo motor 15 by feedback calculation (for example, proportional integral calculation or proportional integral derivative calculation) based on a difference between the calculated current speed and the target speed. Then, control section 21 outputs a control signal to corresponding amplifier section 17 so that the torque corresponding to the set torque command is output from servo motor 15.

In the present embodiment, safety device 30 for a robot is attached to the end effector of articulated arm 12. Safety device 30 includes control section 31 configured as a microprocessor including CPU, ROM, and RAM, sensor section 32 that monitors surroundings, and I/O port 33 for exchanging signals with control section 21.

In the present embodiment, sensor section 32 is configured as a radar sensor of a frequency modulation continuous wave (FMCW) system. Sensor section 32 includes a transmission antenna that transmits a transmission chirp, a reception antenna that receives a reflected wave from an object as a reception chirp, a mixer that mixes the transmission chirp and the reception chirp to generate an intermediate frequency signal (IF signal), a processing section that processes the IF signal to detect a relative distance L to the object and a relative speed V to the object, and the like. The transmission antenna transmits, as one frame, multiple transmission chirps that are modulated so that the frequency changes with the elapse of time and are separated from each other by a certain interval. The processing section includes an A/D converter that A/D-converts the IF signal generated by the mixer, a DSP that performs Fourier transform processing (FFT processing) on the A/D-converted IF signal, and the like. The DSP can calculate relative distance L to the object based on a peak frequency by performing FFT processing (distance FFT processing) on the IF signal in chirp units to acquire a frequency spectrum. Further, the DSP can calculate the relative speed V with respect to the object based on the peak angular frequency by performing FFT processing (speed FFT processing) on the data after the distance FFT processing in units of frames to acquire the peak of the angular frequency.

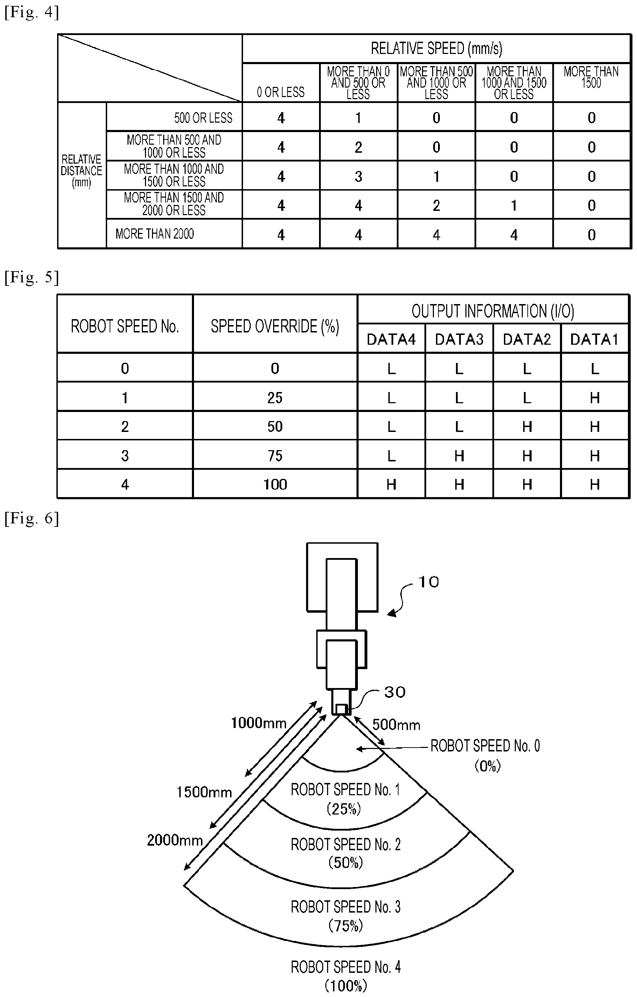

Next, the operation of safety device 30 of the present embodiment will be described. Fig. 3 is a flowchart illustrating an example of information output processing executed by control section 31 (CPU) of safety device 30. In the information output processing, control section 31 first acquires relative distance L and relative speed V between sensor section 32 and the interfering object from sensor section 32 (S100). Subsequently, control section 31 sets robot speed number N corresponding to the speed override based on a combination of relative distance L and relative speed V acquired (S110). When a relationship between relative distance L, relative speed V, and robot speed number N is obtained in advance and stored as a table and relative distance L and relative speed V are given, the setting of robot speed number N is performed by deriving corresponding robot speed number N from the table. Fig. 4 illustrates the relationship among relative distance L, relative speed V, and robot speed number N. As illustrated, robot speed number N is set such that the speed override decreases as relative distance L from sensor section 32 to the interfering object decreases, and the speed override decreases as relative speed V between sensor section 32 and the interfering object in a direction approaching robot main body 10 increases. Accordingly, the robot speed is limited to be greater as relative distance L from sensor section 32 to the interfering object decreases and as relative speed V between sensor section 32 and the interfering object in the direction approaching robot main body 10 increases.

After setting robot speed number N, control section 31 converts the set robot speed number N into output information of a predetermined bit (S120). Here, the output information represents the speed override (for example, five speed limit values of 0%, 25%, 50%, 75%, and 100%) by information of a predetermined bit (for example, 4 bits). When a relationship between robot speed number N and the output information is obtained in advance and stored as a table and robot speed number N is given, the conversion of the output information is performed by deriving the corresponding output information from the table. Fig. 5 illustrates the relationship among the robot speed number, the speed override, and the output information. The relationship between the combination of relative distance L and relative speed V and the speed override can be appropriately changed by connecting a computer to safety device 30 and operating the computer by the user. Then, control section 31 transmits the output information to robot control device 20 via I/O port 33 (S130), and ends the information output processing. Robot control device 20 receives output information from control section 31 of safety device 30 via I/O port 22 as a speed override, and controls servo motor 15 by setting a target speed whose speed is limited according to the speed override by multiplying the speed command value by the received speed override.

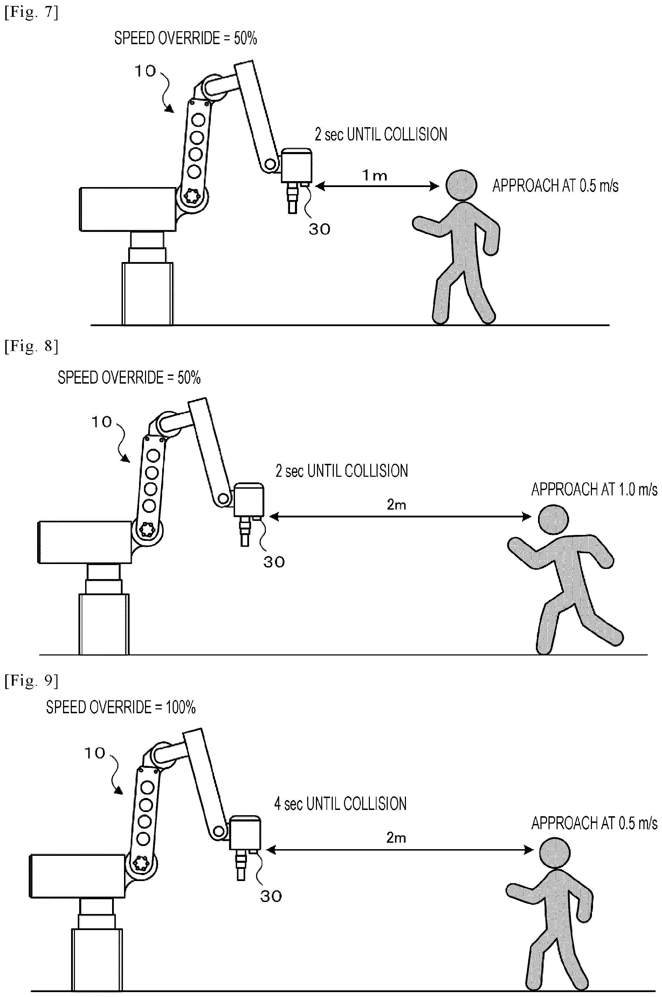

Fig. 6 is a diagram illustrating the relationship between the relative distance between safety device 30 (sensor section 32) and the interfering object and the speed override. As illustrated, when there is no interfering object within a detection range (the relative distance between sensor section 32 and the interfering object is up to 2000 mm) of sensor section 32, that is, when the interfering object is not detected by sensor section 32, the speed override is set to 100%. That is, a robot speed is not limited. Meanwhile, when there is an interfering object within the detection range of sensor section 32, that is, when the interfering object is detected by sensor section 32, the speed override decreases as the interfering object approaches sensor section 32. Further, when the interfering object is moving, the speed override decreases as the relative speed between sensor section 32 and the interfering object increases in the direction approaching sensor section 32. That is, the robot speed is limited to be greater as the interfering object approaches robot main body 10 and as the moving speed of the interfering object in the direction approaching robot main body 10 increases. In the present embodiment, as illustrated in Figs. 7 and 8, when an interfering object (worker) is located within the detection range of sensor section 32 and the interfering object is moving toward robot main body 10 (sensor section 32), the speed override is set to the same value when the time until the interfering object collides with robot main body 10 (sensor section 32) is the same regardless of the position within the detection range. Further, as illustrated in Fig. 9, even in a case where the interfering object is moving toward robot main body 10 (sensor section 32), when the moving speed of the interfering object is slow and there is a margin in time until the interfering object collides with robot main body 10 (sensor section 32), the speed override is set to 100% so that the robot speed is not limited. Accordingly, it is possible to stop robot main body 10 more reliably when the worker approaches robot main body 10 while suppressing unnecessary speed limitation of robot main body 10, and to ensure safety of the worker.

Here, a correspondence relationship between main elements of the embodiment and main elements of the present disclosure described in the claims will be described. That is, sensor section 32 of the present embodiment corresponds to a detection section of the present disclosure, control section 31 that executes S110 and S120 of the information output processing corresponds to a setting section, and control section 31 that executes S130 of the information output processing and I/O port 33 correspond to an output section. Robot main body 10 corresponds to a robot main body, and robot control device 20 corresponds to a robot control device.

The present disclosure is not limited in any way to the embodiment described above, and it is needless to say that the embodiment may be implemented in various aspects as long as it falls within a technical scope of the present disclosure.

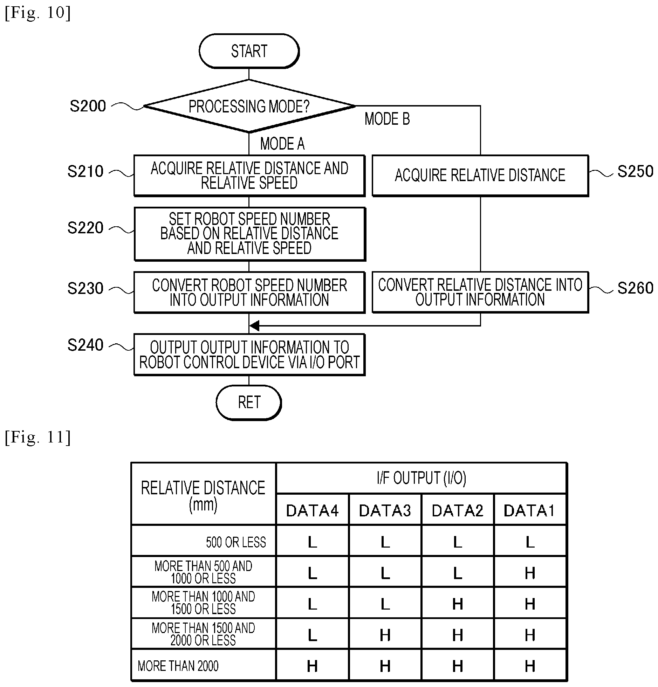

For example, in the above-described embodiment, the speed override is transmitted to robot control device 20 by outputting output information of a predetermined bit to robot control device 20 via I/O port 33. However, safety device 30 may switch between the output information corresponding to the speed override and the output information corresponding to relative distance L via I/O port 33 and transmit the output information to robot control device 20. Fig. 10 is a flowchart illustrating information output processing according to another embodiment. Control section 31 of safety device 30 determines whether a processing mode is mode A or mode B (S200). The processing mode is set in advance by an operator making an input using the input device. When it is determined that the processing mode is mode A, control section 31 acquires relative distance L and relative speed V between sensor section 32 and the interfering object, sets the robot speed number based on the combination of relative distance L and relative speed V, converts the robot speed number into output information, outputs the output information to robot control device 20 via I/O port 33 (S210 to S240), and ends the information output processing, similarly to S100 to S130 of the information output processing of Fig. 3. Meanwhile, when it is determined that the processing mode is mode B, control section 31 acquires relative distance L between sensor section 32 and the interfering object (S250), converts the acquired relative distance L into output information (S260), outputs the output information to robot control device 20 via I/O port 33 (S240), and ends the information output processing. The relationship between the relative speed L and the output information is illustrated in Fig. 11. Accordingly, it is possible to satisfy both the specification of the robot that inputs the speed override and controls the robot speed and the specification of the robot that inputs the relative distance between sensor section 32 and the interfering object and controls the robot speed based on the relative distance.

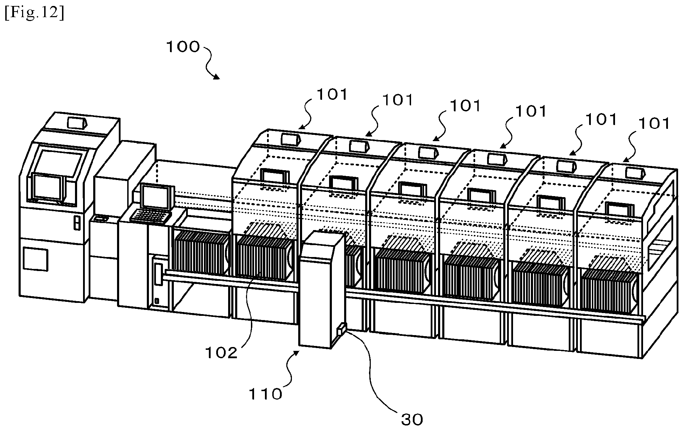

In the above-described embodiment, safety device 30 is attached to an end effector portion (distal end portion) of articulated arm 12 of robot main body 10, but may be attached to base 11 of robot main body 10. Safety device 30 is provided in the stationary robot, but may be provided in a self-propelled robot. The self-propelled robot may be a conveyance robot in addition to the arm robot including the articulated arm described above. For example, as illustrated in Fig. 12, in mounting line 100 having multiple component mounter 101 which are arranged in a conveyance direction of a board, have a feeder table to which feeders 102 are attached and detached, and collect components from feeders 102 and mount the components on the board, automatic exchange robot 110 which moves along mounting line 100 and exchanges feeders 102 with respect to component mounters 101 may be provided. When safety device 30 is provided in automatic exchange robot 110 and an interfering object is detected within a detection range, safety device 30 outputs output information corresponding to a combination of relative distance L and relative speed V to the interfering object to automatic exchange robot 110. Automatic exchange robot 110 multiplies the speed command value by a speed override based on the input output information, thereby traveling at a limited traveling speed corresponding to the speed override.

As described above, in the safety device for a robot of the present disclosure, the speed limit value of the robot speed is set based on the combination of the relative distance and the relative speed between the object within the detection range and the detection section, and the set speed limit value is output to the control device for a robot. Since the control device for a robot only needs to input the speed limit value from the safety device, the robot speed can be appropriately controlled based on the relative distance and the relative speed between the object and the detection section without complicating the interface between the control device and the safety device. As a result, it is possible to further improve safety while simplifying the system.

In the safety device for a robot according to the present disclosure, the output section may output information of a predetermined bit as the speed limit value to the control device via the input/output port, and the setting section may select and set any one of multiple pieces of information to which different speed limit values are respectively assigned based on the combination of the relative distance and the relative speed detected by the detection section. In this case, the number of input/output ports can be reduced and the device can be simplified as compared with a case where the relative distance and the relative speed detected by the detection section are converted into information of predetermined bits and output to the control device for a robot.

In the safety device for a robot according to the present disclosure, the speed limit value may be a speed override value by which a speed command value of the robot is to be multiplied. In this way, the robot can limit the robot speed only by multiplying the speed override.

Further, in the safety device for a robot according to the present disclosure, the output section may have the first mode in which the speed limit value set by the setting section is output to the control device, and a second mode in which a relative distance to an object detected by the detection section is output to the control device. In this way, it is possible to satisfy both the specification of the robot that controls the robot speed by inputting the speed limit value and the specification of the robot that controls the robot speed based on the relative distance by inputting the relative distance between the detection section and the object.

The present disclosure is not limited to the form of the safety device for a robot, and may be a form of a robot system including the robot main body, the control device, and the safety device. In this case, the robot main body may be an arm robot including an arm. Further, the robot main body may be an automatic exchange robot which moves on a predetermined traveling line and exchanges the feeders with respect to the component mounters in a mounting line provided with multiple component mounters which are arranged in a conveyance direction of a board and can collect components from the feeders and mount the components on the board.

### Industrial Applicability

The present disclosure can be applied to manufacturing industry of a robot or a safety device and the like.

### Reference Signs List

1: robot system, 10: robot main body, 11: base, 12: articulated arm, 15: servo motor, 16: encoder, 17: amplifier section, 20: robot control device, 21: control section, 22: I/O port, 30: safety device, 31: control section, 32: sensor section, 33: I/O port, 100: mounting line, 101: component mounter, 102: feeder, 110: automatic exchange robot

## Claims

1. A safety device for a robot including a control device configured to control a robot speed, the safety device comprising:
a detection section configured to detect an object present within a predetermined detection range, the detection section detecting a relative distance and a relative speed between the object within the detection range and the detection section;
a setting section configured to set a speed limit value of the robot speed based on a combination of the relative distance and the relative speed detected by the detection section; and
an output section configured to output the speed limit value set by the setting section to the control device.

2. The safety device for a robot according to Claim 1, wherein
the output section outputs information of a predetermined bit as the speed limit value to the control device via an input/output port, and
the setting section selects and sets any one of multiple pieces of information to which different speed limit values are respectively assigned based on the combination of the relative distance and the relative speed detected by the detection section.

3. The safety device for a robot according to Claim 1 or 2, wherein the speed limit value is a speed override value by which a speed command value of the robot is to be multiplied.

4. The safety device for a robot according to any one of Claims 1 to 3, wherein the output section has a first mode in which the speed limit value set by the setting section is output to the control device and a second mode in which the relative distance to the object detected by the detection section is output to the control device.

5. A robot system comprising:
a robot main body;
a robot control device configured to control a robot speed of the robot main body; and
a safety device including a detection section configured to detect an object present within a predetermined detection range, the detection section detecting a relative distance and a relative speed between the object within the detection range and the detection section, a setting section configured to set a speed limit value of the robot speed based on a combination of the relative distance and the relative speed detected by the detection section, and an output section configured to output the speed limit value set by the setting section to the robot control device.

6. The robot system according to Claim 5, wherein the robot main body is an arm robot including an arm.

7. The robot system according to Claim 5, wherein the robot main body is an automatic exchange robot which moves on a predetermined traveling line and exchanges the feeders with respect to the component mounters in a mounting line provided with multiple component mounters arranged in a conveyance direction of a board and configured to collect components from feeders and mount the components on the board.
